(19) Europäisches Patentamt

European Patent Office

Office européen des brevets

(11) Veröffentlichungsnummer: **0 287 758 B1**

(12) **EUROPÄISCHE PATENTSCHRIFT**

(45) Veröffentlichungstag der Patentschrift: **04.11.92**

(21) Anmeldenummer: **88101993.9**

(22) Anmeldetag: **11.02.88**

(51) Int. Cl.⁵: **G01B 5/00**, B23Q 17/00

(54) **Positionsmesseinrichtung.**

(30) Priorität: **23.04.87 DE 3713548**

(43) Veröffentlichungstag der Anmeldung:
**26.10.88 Patentblatt 88/43**

(45) Bekanntmachung des Hinweises auf die
Patenterteilung:
**04.11.92 Patentblatt 92/45**

(84) Benannte Vertragsstaaten:
**DE FR GB IT**

(56) Entgegenhaltungen:
**EP-A- 0 177 711**
**DE-A- 3 020 003**
**GB-A- 2 162 646**

(73) Patentinhaber: **Dr. Johannes Heidenhain GmbH**
**Dr.-Johannes-Heidenhain-Strasse 5 Postfach 1260**
**W-8225 Traunreut(DE)**

(72) Erfinder: **Pechak, Peter**
**Hang 5**
**W-8221 Traunwalchen(DE)**

## Beschreibung

Die Erfindung bezieht sich auf eine Positionsmeßeinrichtung nach dem Oberbegriff des Anspruches 1.

Beim heutigen Stand der Technik werden Maschinen, beispielsweise Werkzeugmaschinen mit Positionsmeßeinrichtungen ausgestattet, die es ermöglichen, die Relativlage des Schlittens zum Bett der Maschine als Positionsmeßwert digital abzulesen, oder die Meßwerte werden einer numerischen Steuerung zugeführt und dort in bekannter Weise zur Steuerung der Maschine benutzt.

Derartige Positionsmeßeinrichtungen sind beispielsweise in der DE-A-30 20 003 beschrieben. Mit Hilfe der dort beschriebenen Sicherungsvorrichtungen läßt sich der Montagefuß am Gehäuse verschieben.

Sowohl die Maschinen als auch die Positionsmeßeinrichtungen weisen Toleranzen auf, die zu Fehlern führen können, die letztendlich als Maschinenfehler gelten. Um diese resultierenden Gesamtfehler ermitteln zu können, werden beim Maschinenhersteller die fertigen, mit Positionsmeßeinrichtungen versehenen Werkzeugmaschinen mit einem Vergleichsmeßsystem entsprechend hoher Genauigkeit vermessen.

Dazu sind interferometrische Meßeinrichtungen geeignet, aber auch Meßeinrichtungen, die nach der Gitterabtastmethode arbeiten, werden zu Vergleichsmessungen benutzt, wenn sie eine um mindestens eine Größenordnung höhere Genauigkeit aufweisen, als die Meßeinrichtung, mit der die zu vermessende Maschine ausgerüstet ist.

Die mit der Vergleichsmeßeinrichtung ermittelten Abweichungen können auf verschiedenste Weise weiterverarbeitet werden. Die Kompensation dieser Abweichungen ist jedoch nicht Gegenstand der Erfindung und in zahlreichen Veröffentlichungen auch bereits abgehandelt, so daß hier darauf nicht näher eingegangen wird.

Der Erfindung liegt die Aufgabe zugrunde, eine Positionsmeßeinrichtung anzugeben, die sich hinreichend genau und einfach an einer zu vermessenden Maschine montieren läßt.

Diese Aufgabe wird mit einer Positionsmeßeinrichtung gelöst, deren Merkmale im Anspruch 1 niedergelegt sind.

In den athängigen Ansprüchen sind vorteilhafte Ausgestaltungen angegeben.

Die besonderen Vorteile der Erfindung liegen darin, daß keine sehr aufwendige Justierung der Abtasteinrichtung an der Maschine erforderlich ist und daß dennoch eine Positionsmeßeinrichtung zum Messen verwendet werden kann, die für die Abtasteinrichtung keine eigene Führung aufweist.

Mit Hilfe eines Ausführungsbeispiels soll die Erfindung anhand einer Vorrichtung zur Durchführung des Verfahrens noch näher erläutert werden.

Es zeigt

Figur 1   einen Ausschnitt einer Positionsmeßeinrichtung in der Montagephase,

Figur 2   ein Detail aus Figur 1,

Figur 3   einen Schnitt entlang der Linie III-III in Figur 1 und

Figur 4   einen Ausschnitt einer montierten Positionsmeßeinrichtung.

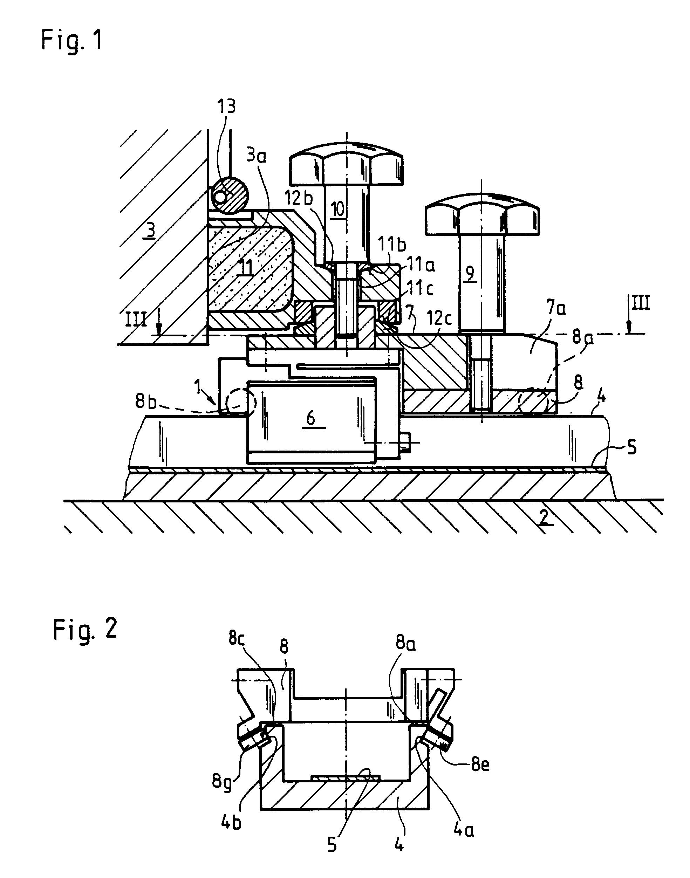

Figur 1 zeigt die Montagephase, in der eine Positionsmeßeinrichtung 1 gerade an eine zu vermessende Werkzeugmaschine montiert wird. Eine Maßverkörperung 4, die in bekannter Weise eine Meßteilung 5 trägt, ist am Bett 2 der Werkzeugmaschine ausgerichtet und befestigt. Gemessen werden soll die Lage eines Werkzeugschlittens 3 relativ zum Bett 2 der Werkzeugmaschine. Die Messung soll eine Vergleichsmessung bzw. eine Eichmessung bei der mit einem anderen, nicht dargestellten Meßsystem ausgerüsteten Werkzeugmaschine sein. Aus diesem Grund sind an die erfindungsgemäß zu montierende Positionsmeßeinrichtung 1 auch besondere Anforderungen zu stellen. Die Meßteilung 5 muß von sehr hoher Genauigkeit sein und deren Abtastung durch eine Abtasteinrichtung 6 muß sehr präzise erfolgen. Aus diesem Grund kommt eine Eigenführung der Abtasteinrichtung 6 an der Maßverkörperung 4 nicht in Betracht, denn in diesem Fall wäre als Verbindungselement zwischen der Abtasteinrichtung 6 und dem Werkzeugschlitten 3 eine Kupplung notwendig, die Ungenauigkeiten, vor allem Umkehrfehler hervorrufen würde.

Demgemäß muß die Abtastung der Meßteilung 5 berührungslos erfolgen. Bei berühungsloser Abtastung ist jedoch die Führung der Abtasteinrichtung 6 problematisch. Vor allem ist es bei mobilen Meßeinrichtungen - wie sie für Vergleichsmessungen bzw. Eichungen benutzt werden - schwierig, eine möglichst fehlerfreie Ankopplung der Abtasteinrichtung 6 relativ zur Maßverkörperung zu schaffen, da die Anbaubedingungen von Maschine zu Maschine sehr stark differieren.

Zurückkommend auf die Montagephase, die in Figur 1 gezeigt ist, soll nachstehend unter Einbeziehung der Figuren 2 bis 4 die schrittweise Montage der Meßeinrichtung 1 erläutert werden.

Die Abtasteinrichtung 6 ist über eine Zwischenplatte 7 an einem Hilfswagen 8 mit Hilfe einer Klemmschraube befestigt. Die Klemmschraube 9 greift durch einen Längsschlitz 7a in der Zwischenplatte 7 und verbindet die Zwischenplatte 7 lösbar mit dem Hilfswagen 8. Die Klemmschraube 10, welche an der Zwischenplatte 7 mit der Abtasteinrichtung 6 angreift, dient zur Fixierung eines Magnethalters 11. Im Magnethalter 11 sind im Bereich einer Bohrung 11a für die Klemmschraube 10 Kugelpfannen 11b und 11c für Kugelscheiben 12b und 12c eingebracht. Bei gelöster Klemmschraube 10 kann der Magnethalter 11 in gewissen Grenzen gedreht und gekippt werden. Diese Winkelbeweglichkeit des Magnethalters 11 ist erforderlich, damit er sich an eine Anschlagfläche 3a des Werkzeugschlittens 3 anpassen kann.

Figur 2 zeigt schematisch den Hilfswagen 8 auf der Maßverkörperung 4. Der Hilfswagen 8 läuft auf vier Kugellagern 8a, 8b, 8c, 8d, von denen eines in nicht dargestellter Weise einstellbar ist. Die seitliche Führung des Hilfswagens 8 auf der Maßverkörperung 4 erfolgt durch weitere vier Kugellager 8e, 8f, 8g, 8h, von denen zwei starr und zwei gefedert am Hilfswagen 8 befestigt sind. Durch Schrägstellung dieser vier Kugellager 8e, 8f, 8g, 8h und eine korrespondierende Ausgestaltung ihrer Führungsbahnen 4a, 4b an der Maßverkörperung 4 ist eine Sicherung gegen Abheben gegeben.

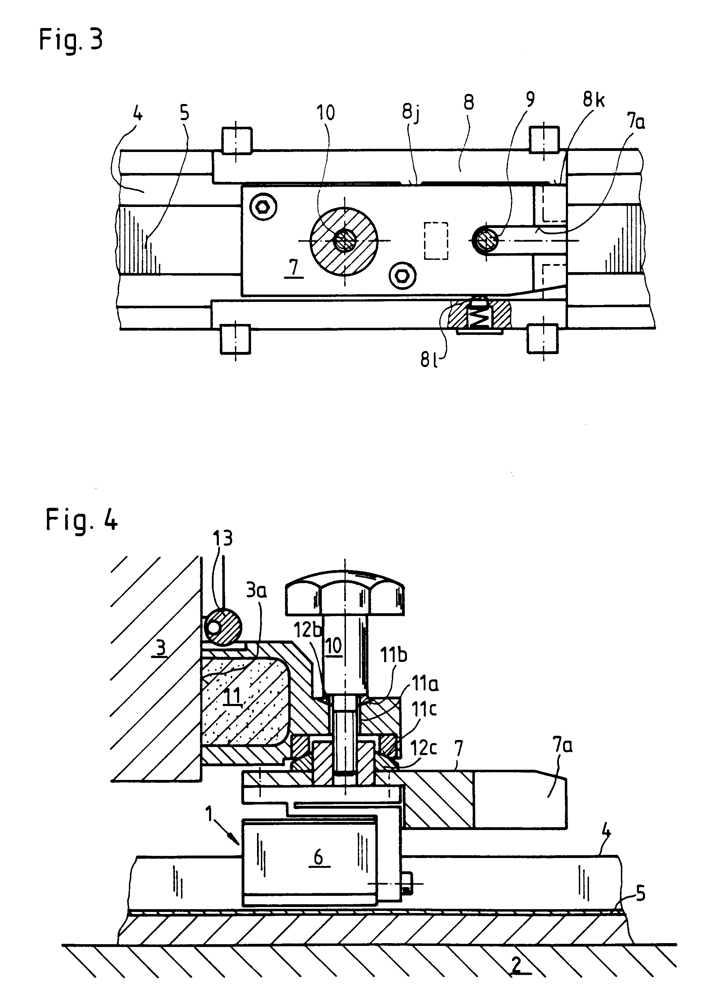

Aus Figur 3 - die einen Schnitt entlang der Linie III-III aus Figur 1 darstellt - ist ersichtlich, wie die Zwischenplatte 7 im Hilfswagen 8 eingesetzt ist. Durch nicht näher bezeichnete Schrauben ist die Abtasteinrichtung 6 (hier durch die Zwischenplatte 7 verdeckt) an der Zwischenplatte 7 in der Weise befestigt, daß sie genau zur Teilung 5 ausgerichtet ist. Im Hilfswagen 8 sind für die Zwischenplatte 7 ausgearbeitete Anlageflächen 8j und 8k sowie eine dritte gefederte Anlage 8l vorgesehen, durch welche die Zwischenplatte 7 - und somit auch die Abtasteinrichtung 6 -immer eine definierte Position innerhalb des Hilfswagens 8 einnimmt. Da der Hilfswagen 8 präzise an der Maßverkörperung 4 geführt ist, ist auch eine präzise Führung der Abtasteinrichtung 6 gegenüber der Meßteilung 5 gewährleistet, was eine sichere Ablesung der Meßteilung 5 bewirkt.

Nachdem die Maßverkörperung 4 gemäß Figur 1 an dem Bett 2 der Werkzeugmaschine ausgerichtet und befestigt ist, wird die vorbeschriebene Einheit aus Abtasteinrichtung 6, Zwischenplatte 7 und Hilfswagen 8 an die Führungsbahnen 4a und 4b der Maßverkörperung 4 angesetzt. Durch die Maßverkörperung 4 präzise geführt, wird die Abtasteinrichtung 6 mit Hilfe des Hilfswagens 8 so weit verschoben, bis der Magnethalter 11 an der Anschlagfläche 3a des Werkzeugschlittens 3 sicher anliegt. Da sich der Magnethalter 11 in gelöster Stellung der Klemmschraube 10 genau an die Anschlagfläche 3a anlegen kann, ist es nicht erforderlich, daß die Anschlagfläche 3a in einem genauen Bezug zur Abtasteinrichtung 6 liegt. Vielmehr richtet sich der Magnethalter 11 durch die Kugelscheiben 12b und 12c in seinen Kugelpfannen 11b und 11c entsprechend an der Anschlagfläche 3a aus und wird in dieser Position mit der Klemmschraube 10 fixiert. Damit ist die Abtasteinrichtung 6 in ihrer präzisen Abtastposition fest mit dem Werkzeugschlitten 3 verbunden.

Nunmehr wird die Klemmschraube 9 und damit die feste Verbindung zwischen der Abtasteinrichtung 6 und dem Hilfswagen 8 gelöst. Der Hilfswagen 8 wird entfernt, und die Positionsmeßeinrichtung 1 befindet sich fest an der zu vermessenden Maschine, so daß die Vergleichsmessungen durchgeführt werden können.

Damit auch kleinste Fremdkrafteinwirkungen auf die Abtasteinrichtung 6 vermieden werden, kann ein nicht dargestelltes Kabel mit einem kleinen Magneten, der mittels Kabelschelle an diesem befestigt ist, ebenfalls an der Anschlagfläche 3a angesetzt werden. Dadurch wird eine Art Zugentlastung gebildet.

Figur 4 zeigt die Positionsmeßeinrichtung 1 in Meßposition - also ohne Hilfswagen 8.

Nach den Vergleichsmessungen wird der Hilfswagen 8 über die Zwischenplatte 7 wieder in feste Verbindung mit der Abtasteinrichtung 6 gebracht. Dazu wird die Klemmschraube 9 fest angezogen und anschließend die Klemmschraube 10 gelöst, um die feste Verbindung zwischen der Abtasteinrichtung 6 und dem Werkzeugschlitten 3 aufzuheben. Um den Magnethalter 11 von der Anschlagfläche 3a lösen zu können, ist ein Exzenter 13 am Magnethalter 11 angebracht, mit dem der Magnethalter 11 von der Anschlagfläche 3a des Werkzeugschlittens 3 abgedrückt werden kann.

## Patentansprüche

1. Positionsmeßeinrichtung (1) zur Messung der Lage zweier relativ zueinander beweglicher Teile einer Maschine wie Bett (2) und Schlitten (3), mit einer eine Meßteilung (5) tragenden, am ersten Teil (2) befestigten Maßverkörperung (4) und einer zur Meßteilung (5) justierbaren Abtasteinrichtung (6), wobei für die exakte Zuordnung der Abtasteinrichtung (6) zur Meßteilung (5) die Abtasteinrichtung bis zu einer Anschlagfläche (3a) des zweiten Teils (3) geführt verschiebbar ist, dadurch gekennzeichnet, daß die Abtasteinrichtung (6) über eine Zwischenplatte (7) an einem Hilfswagen (8) lösbar befestigt ist, daß der Hilfswagen (8) auf der Maßverkörperung (4) in Führungsbahnen (4a, 4b) geführt ist, so daß die Abtasteinrichtung (6) genau zur Meßteilung (5) der Maßverkörperung (4) justiert ist, und daß die Abtasteinrichtung (6) mit Hilfe einer Anbauvorrichtung (11) unter Beibehaltung ihrer Justierung bezüglich der Meßteilung (5) an der Anschlagfläche (3a) des zweiten Teils (3) befestigt werden kann, so daß nach Lösen des Hilfswagens (8) eine Führung der vorgenannten Maschine (2, 3) die Führung der Abtasteinrichtung (6) darstellt.

2. Vorrichtung nach Anspruch 1, dadurch gekennzeichnet, daß der Hilfswagen (8) Kugellager (8a bis 8h) aufweist, über die er sich an den Führungsbahnen (4a, 4b) der Maßverkörperung (4) abstützt.

3. Vorrichtung nach Anspruch 1, dadurch gekennzeichnet, daß die Zwischenplatte (7) die Anbauvorrichtung (11) aufweist, wobei die Anbauvorrichtung (11) schwenkbar und mittels einer Klemmschraube (10) feststellbar ist.

4. Vorrichtung nach Anspruch 3, dadurch gekennzeichnet, daß die Anbauvorrichtung ein Magnethalter (11) ist.

5. Vorrichtung nach Anspruch 4, dadurch gekennzeichnet, daß für den Magnethalter (11) Kugelpfannen (11b, 11c) und Kugelscheiben (12b, 12c) ein Gelenk bilden, mit dessen Hilfe er schwenkbar ist.

## Claims

1. A position measuring device (1) for measuring the position of two parts of a machine movable relative to one another, such as the bed (2) and slide (3), with a measuring element (4) carrying a measuring scale (5) fixed on the first part (2) and a sensing device (6) adjustable relative to the measuring scale (5), wherein the sensing device (6) can be guided slidably up to a stop surface (3a) of the second part (3) for precise alignment of the sensing device (6) relative to the measuring scale (5), characterized in that the sensing device (6) is releasably fixed via an intermediate plate (7) on an auxiliary carriage (8), in that the auxiliary carriage (8) is guided on the measuring element (4) in guideways (4a, 4b), so that the sensing device (6) is adjusted accurately relative to the measuring scale (5) of the measuring element (4), and in that the sensing device (6) can be fixed on the stop surface (3a) of the second part (3) with the aid of an attachment device (11) while maintaining its adjustment relative to the measuring scale (5), so that, after releasing the auxiliary carriage (8) a guide of the said machine represents the guide for the sensing device (6).

2. A device according to claim 1, characterized in that the auxiliary carriage (8) has rolling bearings (8a to 8h) through which it is supported on the guideways (4a, 4b) of the measuring element (4).

3. A device according to claim 1, characterized in that the intermediate plate (7) comprises the attachment device (11), the attachment device (11) being capable of swivelling and adapted to be fixed by means of a clamping screw (10).

4. A device according to claim 3, characterized in that the attachment device is a magnetic retainer (11).

5. A device according to claim 4, characterized in that ball seats (11b, 11c) and ball washers (12b, 12c) form a joint for the magnetic retainer, with the aid of which it can be swivelled.

## Revendications

1. Dispositif de mesure de position (1) pour la mesure de la position de deux éléments d'une machine mobiles l'un par rapport à l'autre, tels que le bâti (2) et le chariot (3) d'une machine, comportant une mesure matérialisée (4) qui porte une graduation de mesure (5) et est fixée sur le premier élément (2) ainsi qu'un dispositif de lecture (6) réglable par rapport à la graduation de mesure (5), le dispositif de lecture (6) pouvant être déplacé en translation jusqu'à une surface de butée (3a) du deuxième élément (3) pour le positionnement exact du dispositif de lecture (6) par rapport à la graduation de mesure (5), caractérisé par le fait que le dispositif de lecture (6) est monté avec possibilité de démontage au moyen d'une plaque intermédiaire (7) sur un chariot auxiliaire (8), que le chariot auxiliaire (8) est guidé dans des glissières (4a, 4b) sur la mesure matérialisée (4) de manière telle que le dispositif de lecture (6) soit positionné avec précision par rapport à la graduation de mesure (5) de la mesure matérialisée (4) et par le fait que le dispositif de lecture (6) peut être fixé sur la surface de butée (3a) du deuxième élément (3) au moyen d'un dispositif d'adaptation (11) en conservant son réglage par rapport à la graduation de mesure (5) de manière telle qu'après séparation du chariot auxiliaire (8), une glissière de ladite machine (2, 3) assure le guidage du dispositif de lecture (6).

2. Dispositif selon la revendication 1, caractérisé par le fait que le chariot auxiliaire (8) est muni de roulements à billes (8a à 8h) par l'intermédiaire desquels il prend appui sur les glissières (4a, 4b) de la mesure matérialisée (4).

3. Dispositif selon la revendication 1, caractérisé par le fait que la plaque intermédiaire (7) porte le dispositif d'adaptation (11), le dispositif d'adaptation (11) pouvant pivoter et étant immobilisé à l'aide d'une vis de blocage (10).

4. Dispositif selon la revendication 3, caractérisé par le fait que le dispositif d'adaptation est un support magnétique (11).

5. Dispositif selon la revendication 4, caractérisé par le fait que des cuvettes sphériques (11b, 11c) et des rondelles sphériques (12b, 12c) forment une articulation pour le support magnétique (11), grâce à laquelle ce dernier peut pivoter.

Fig. 1

Fig. 2

Fig. 3

Fig. 4